# EUROPÄISCHE PATENTANMELDUNG

(11) **EP 1 298 528 A1**
(43) Veröffentlichungstag der Anmeldung: **02.04.2003**
(21) Anmeldenummer: 01123607.2
(22) Anmeldetag: 01.10.2001
(51) Int. Cl.: G06F 9/46

(54) **Verfahren zur Kommunikation zwischen mindestens einem Client und mindestens einem Server**

(71) Anmelder: SIEMENS AKTIENGESELLSCHAFT, 80333 München (DE)
(72) Erfinder: Bauche, Volker, 81739 München (DE)

(57) **Zusammenfassung**

Die Erfindung betrifft ein Verfahren und ein System zur Kommunikation zwischen mindestens einem Client und mindestens einem Server in einem Kommunikationsnetz, in dem Client-Anwendungen mit Server-Diensten kommunizieren, wobei die Server-Dienste unterschiedliche individuelle Befehlssätze mit Individualbefehlen verwenden, und durch Zuordnungsinformationsmittel (ATI) zwischen einem Standardbefehl und einem Individualbefehl dem Client die Entsprechung zu mindestens einem Standardbefehl mitgeteilt wird.

## Beschreibung

Die Erfindung betrifft ein Verfahren zur Kommunikation zwischen mindestens einem Client und mindestens einem Server in einem Kommunikationsnetz, in dem Client-Anwendungen mit Server-Diensten kommunizieren, wobei die Server-Dienste unterschiedliche individuelle Befehlssätze mit Individualbefehlen verwenden.

Des weiteren betrifft die Erfindung ein System für die Kommunikation zwischen Client-Anwendungen und Server-Diensten in einem Kommunikationsnetz, vorzugsweise zur Durchführung des oben genannten Verfahrens.

Es ist allgemein bekannt, dass in Kommunikationssystemen, wie beispielsweise dem Internet oder firmeninternen Netzwerken, Clients und Server vorliegen, wobei auf den Servern Server-Dienste ablaufen, die Anfragen von Client-Anwendungen bedienen. Solche Server-Dienste können beispielsweise einfache Textprogramme sein, die den Textinhalt von Dateien zur Verfügung stellen, um Recherchen nach dem Volltextinhalt oder nach Stichworten zuzulassen. Es können aber auch strukturierte Datenbanken vorliegen, die nach unterschiedlichen Befehlssätzen abgefragt werden können, wie beispielsweise dem SQL-Befehlssatz oder individuellen Datenbankbefehlssätzen, wie beispielsweise dBase, Paradox, Oracel oder ähnlichen.

Des weiteren ist es bekannt, dass im Internet sogenannte Software-Agenten verwendet werden, die selbständig in Netzwerken, wie beispielsweise dem Internet, von deren Besitzer gestellte Aufgaben durchführen und mit Server-Diensten kommunizieren. Ein solcher Software-Agent kann in Kommunikationsnetzen eingesetzt werden, um dort selbständig die ihm gestellten Aufgaben zu erfüllen, indem er angebotene Services in Anspruch nimmt. Ein Beispiel kann darin bestehen, dass ein Software-Agent in einem Gebäude-Netzwerk als Client-Anwendung mit Hilfe von Server-Diensten die Funktionen einer Gebäudeautomatisation steuert, wie beispielsweise das Herauf- und Herunterfahren von Rolläden und Abschattungsanlagen gekoppelt mit der Regulierung von Heizungs- und Klima-Anlagen, wobei er sich gleichzeitig Informationen über klimatische Randbedingungen durch die in den Räumen installierten Messgeräte holt. Außerdem kann auch noch das selbständige An- und Abschalten von Lichtsystemen entsprechend einer zuvor detektierten Benutzung einzelner Räume oder Bereiche durchgeführt werden.

Bezüglich solcher Software-Agenten und ihrer Funktionsweise wird beispielhaft auf die Patentschrift US 5,931,907 (=DE 696 06 021 T2) und die im Internet zugänglichen Skripten http://caladan.wiwi.uni-frankfurt.de/IWI/Veranstaltung/SBWL-SS96/T8/agnthtm1.htm und http://www-wi.es.uni-magdeburq.de/%7Esattler/lectures/skript.html, insbesondere http://wwwwi.cs.uni-magdeburg.de /%7Esattler/lectures/agenten.ps, hingewiesen.

Das wesentliche solcher Software-Agenten liegt also darin, dass sie Aufgaben selbständig, durch Anwendung von Strategien lösen, anstatt starre Algorithmen abzuarbeiten.

Das Problem bei all solchen Client-/Server-Beziehungen besteht nun darin, dass es eine Vielzahl von Server-Diensten gibt, welche auf unterschiedlichen Programmiersprachen basieren beziehungsweise unterschiedliche Makro-Funktionen aufweisen, die dem Client als solche nicht von vorne herein bekannt sind. Hierdurch ergibt sich das Problem, dass ein Client - gemäß dem derzeitigen Stand der Technik - so programmiert sein muss, dass er originär den Befehlssatz der angesprochenen Server-Dienste kennen muss, um mit diesem Server-Dienst zu kommunizieren und entsprechenden Informationsaustausch durchzuführen.

Es ist daher Aufgabe der Erfindung ein Verfahren zur Kommunikation zwischen einem Client und mindestens einem Server in einem Kommunikationsnetz zu finden, welches es einer beliebigen Client-Anwendung ermöglicht auf beliebige Server-Dienste zuzugreifen.

Des weiteren ist es Aufgabe der Erfindung auch ein System für die Kommunikation zwischen Client-Anwendungen und Server-Diensten in einem Kommunikationsnetz zu finden, bei dem beliebige Client-Anwendungen auf beliebige Server-Dienste mit unterschiedlichen individuellen Befehlssätzen zugreifen können.

Diese Aufgaben werden durch die Merkmale der unabhängigen Patentansprüche gelöst. Vorteilhafte Weiterbildungen der Erfindung sind Gegenstand untergeordneter Ansprüche.

### Der Erfinder hat folgendes erkannt:

Grundsätzlich wäre es wünschenswert für alle bestehenden Server-Applikationen in allen Netzwerken eine standardisierte Abfrage- und Steuerungs-Sprache zu vereinbaren, an die sich alle Programmentwickler halten. Hierdurch würde das Problem der Vielsprachigkeit gelöst werden, jedoch wäre ein solches System extrem starr und aufgrund der Vielfalt der bestehenden Programme und technischer Probleme beim Implementieren eines einzigen Standardbefehlssatzes allein technisch kaum überwindbar.

Allerdings besteht die Möglichkeit einen solchen Standardbefehlssatz zu definieren, der flexibel mit den Anforderungen wachsen kann und jedem Hersteller von Programmen die Freiheit zu überlassen, an geeigneter Stelle eine Übersetzung der Standardbefehle in den individuellen Befehlssatz seiner jeweiligen Programmiersprache oder seines jeweiligen damit programmierten Server-Dienstes zur Verfügung zu stellen, so dass eine Client-Anwendung, wenn sie auf einen neuen, unbekannten Server-Dienst stößt, zunächst eine Lehrphase durchschreitet, in der den von ihr abgefragten Standardbefehlen die individuellen Befehle des Server-Dienstes zugeordnet werden, also die Entsprechung im Individualbefehlssatz des Server-Dienstes mitgeteilt wird. Anschließend kann die Client-Anwendung mit dem Server-Dienst, direkt unter Zuhilfenahme des individuellen Befehlssatzes des Server-Dienstes, kommunizieren.

Entsprechend diesem grundsätzlichen Erfindungsgedanken schlägt der Erfinder vor, das an sich bekannte Verfahren zur Kommunikation zwischen mindestens einem Client und mindestens einem Server in einem Kommunikationsnetz, in dem dient-Anwendungen mit Server-Diensten kommunizieren, wobei die Server-Dienste unterschiedliche individuelle Befehlssätze mit Individualbefehlen verwenden, dahingehend zu verbessern, dass durch Zuordnungsinformationsmittel (ATI = Agenten-Tutorial-Interface) zwischen mindestens einem Standardbefehl und mindestens einem individuellen, einem bestimmten Server-Dienst zugeordneten, Individualbefehl auf Anfrage der dient-Anwendung die Entsprechung zu mindestens einem Standardbefehl in Form eines Individualbefehls mitgeteilt wird, so dass die Client-Anwendung von nun an unter Verwendung des mindestens einen Individualbefehls mit dem Server-Dienst kommunizieren kann.

Durch dieses erfindungsgemäße Verfahren wird nun die Möglichkeit geschaffen, dass jeder Programmhersteller, ohne Änderung seiner eigenen Anwendungen, ein für Client-Anwendungen zugängliches Interface, ein sogenanntes Agenten-Tutorial-Interface = ATI, zur Verfügung stellen kann, so dass jede Client-Anwendung entweder einmalig bei ihrem ersten Kontakt mit dem entsprechenden Server-Dienst oder jedes mal bei einem Kontakt mit dem Server-Dienst die Entsprechung der gewünschten Standardbefehle mit den Individualbefehlen der jeweiligen Anwendung zur weiteren Verwendung abfragen kann. Das Zuordnungsinformationsmittel, oder auch das ATI, lehrt also die Client-Anwendung, vorzugsweise einen Software-Agenten, im Umgang mit einem Server-Dienst. Dies geschieht ähnlich, wie einem menschlichen Benutzer eines Gerätes oder einer Anwendung durch eine Betriebsanleitung, eine Beschreibung oder ein Software-Tutorial die Benutzung des Gerätes oder der Anwendung beigebracht wird.

Erfindungsgemäß kann hierbei mindestens ein Zuordnungsinformationsmittel (ATI) als Teil des Server-Dienstes betrieben werden, das heißt jeder Server-Dienst stellt den Client-Anwendungen eine Übersetzungstabelle zur Verfügung, in der die notwendigen Entsprechungen zwischen Standardbefehlen und Individualbefehlen eingetragen sind, die dann die Client-Anwendung abrufen kann.

Eine andere Möglichkeit besteht darin, dass ein solches Zuordnungsinformationsmittel nicht mit dem Server-Dienst direkt verbunden ist, aber auf dem gleichen physischen Server zur Verfügung gestellt wird, damit ein sehr schneller Zugriff auf diese Entsprechungen gesichert wird.

Eine weitere Alternative oder zusätzliche Möglichkeit besteht darin, dass mindestens ein Zuordnungsinformationsmittel (ATI) als gesonderte, vorzugsweise zentral organisierte, Datenbank oder Tabelle im Kommunikationsnetz betrieben wird. Hierbei kann beispielsweise ein zentral verwalteter Dienst zur Verfügung gestellt werden, an den alle Programmhersteller die Entsprechungen der Standardbefehle zu ihren Server-Diensten mitteilen und in eine entsprechende Datenbank eintragen, so dass Client-Anwendungen jeweils an einer zentralen bekannten Stelle die Zuordnungen zwischen den Standardbefehlssätzen und den Individualbefehlssätzen der unterschiedlichen Server-Dienste finden können. Hierdurch muss die Client-Anwendung vom Server-Dienst lediglich noch eine eindeutige Identifizierung dieses Server-Dienstes abfragen, aufgrund der im zentral organisierten Zuordnungsinformationsmittel die Entsprechungen zwischen den Standardbefehlen und den Individualbefehlssätzen eingeholt werden können.

Erfindungsgemäß können solche Client-/Server-Beziehungen Datenabfragen einer Client-Anwendung vom Server-Dienst sein, beispielsweise um Informationen zu einem bestimmten Thema in einem Firmennetz oder im Internet zu extrahieren.

Eine andere Anwendung kann in der Steuerung bestimmter Funktionen liegen, indem die Client-Anwendung dem Server-Dienst nach Durchlaufen einer vorherigen Lehrphase die entsprechenden individuellen Steuerbefehle zukommen lässt.

Das erfindungsgemäße Verfahren kann für die Kommunikation zwischen Client und Server in allen Kommunikationsnetzen, beispielsweise im Internet und/oder in einem Firmennetzwerk und/oder in einem Gebäudesteuerungsnetz und/oder einem Funkkommunikationsnetz oder ähnlichem, stattfinden.

Außerdem kann in einer speziellen Ausführung des Verfahren vorgesehen sein, dass die Anfragen des Client mit Hilfe eines sogenannten Software-Agenten, der selbständig seine Such- und Steuerungsaufgaben ausführt, durchgeführt werden.

Entsprechend dem grundlegenden Erfindungsgedanken schlägt der Erfinder auch vor, dass an sich bekannte System für die Kommunikation zwischen Client-Anwendungen und Server-Diensten in einem Kommunikationsnetz, bestehend aus mindestens einer Client-Anwendung, einer Vielzahl von Server-Diensten und einem, die mindestens eine Client-Anwendung und die Server-Dienste verbindenden, Netzwerk, wobei die Server-Dienste durch unterschiedliche Befehlssätze gesteuert werden, dahingehend zu verbessern, dass Zuordnungsinformationsmittel (ATI) vorgesehen werden, welche auf Anfrage der mindestens einen Client-Anwendung die Entsprechung mindestens eines Standardbefehls zu mindestens einem individuellen, einem bestimmten Server-Dienst zugeordneten, Individualbefehl in Form des Individualbefehls an die Client-Anwendung mitteilt, so dass die Client-Anwendung von nun an unter Verwendung des mindestens einen Individualbefehls mit dem Server-Dienst kommunizieren kann.

Vorteilhaft kann solch ein System dahingehend ausgestaltet werden, dass die Client-Anwendung einen Speicher aufweist, in dem die vom Zuordnungsinformationsmittel (ATI) bisher erhaltenen Entsprechungen niedergelegt sind.

Vorteilhaft kann das Zuordnungsinformationsmittel (ATI) ein Teil des Server-Dienstes sein. Andererseits kann auch das mindestens eine Zuordnungsinformationsmittel (ATI) als eigener Server-Dienst im Kommunikationsnetz betrieben werden, wobei die Entsprechungen der Standardbefehle in einer Datenbank oder Tabelle für eine Vielzahl von Server-Anwendungen dort gespeichert sind.

Die Kommunikation zwischen Client und Server kann beispielsweise in einer Datenabfrage der Client-Anwendung vom Server-Dienst sein, wobei die Client-Anwendung beispielsweise ein Software-Agent ist, der das Kommunikationsnetz nach Informationen durchsucht.

Eine andere Möglichkeit einer Client-Anwendung besteht darin, dass diese ein Steuerungsprogramm, beispielsweise für eine Gebäudesteuerung, ist.

Erfindungsgemäß kann das Kommunikationsnetz beispielsweise das Internet, oder ein Intranet in einem Unternehmen und/oder einer öffentlichen Einrichtung, oder ein Gebäudesteuerungsnetz, und/oder ein öffentliches oder lokales Funkkommunikationsnetz beinhalten.

Des weiteren kann in einer besonderen Ausgestaltung der Erfindung ein Server-Dienst Teil eines steuerbaren Funktionsgegenstandes, vorzugsweise in einem Gebäude oder Fahrzeug oder einer öffentlichen Einrichtung, sein. Auch kann der Server-Dienst Teil mindestens eines abfragbaren Messinstrumentes, oder eine Datenbank oder ähnliches darstellen.

Im folgenden wird die Erfindung anhand der bevorzugten Ausführungsbeispiele mit Hilfe der Figuren näher beschrieben. Es zeigen im einzelnen:
- Figur 1:: Beispielhafte Suchnachfrage eines Software-Agenten;
- Figur 2:: Schematische Darstellung einer Gebäudesteuerung mit dem erfindungsgemäßen Verfahren.

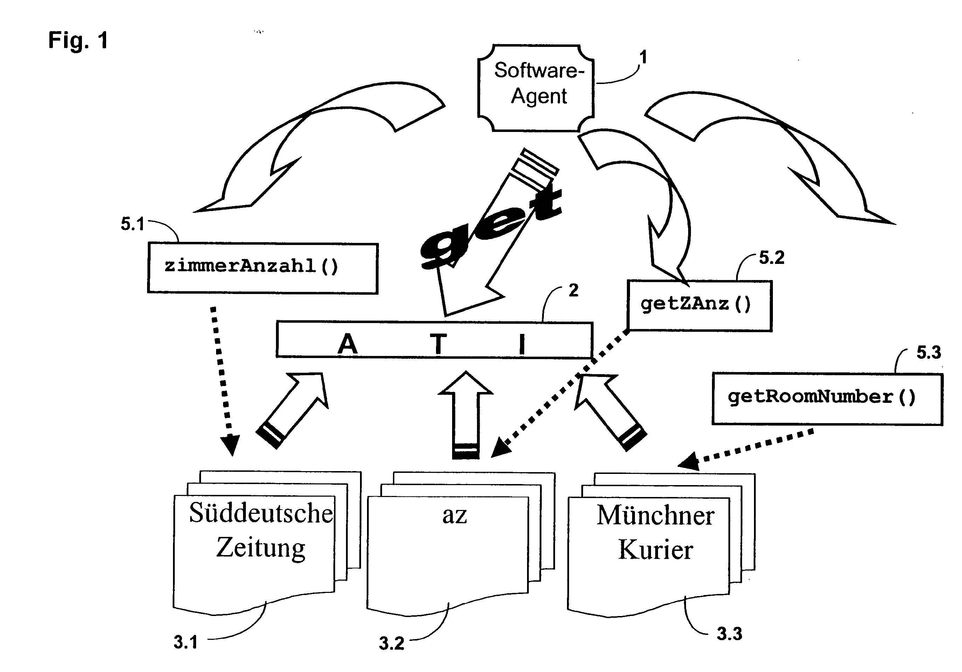

Die Figur 1 zeigt eine schematische Darstellung zur Durchführung des erfindungsgemäßen Verfahrens unter Anwendung eines Software-Agenten 1.

Der Software-Agent 1 hat in diesem Beispiel die Aufgabe nach einer 3-Zimmer-Wohnung zu suchen. Als Anbieter stehen hierfür beispielhaft drei Tageszeitungen 3.1 bis 3.3 zur Verfügung, die in ihrem Annoncenteil entsprechende Angebote aufführen. Jede einzelne Tageszeitung 3.1 bis 3.3 verwendet für die Abfrage ihres Anzeigenbestandes unterschiedliche Befehlsgruppen, die jedoch jeweils in einem Agenten-Tutorial-Interface (ATI) 2 mit ihrer Entsprechung zu einem Standardbefehlssatz niedergelegt sind.

Der Software-Agent 1 fragt nun bei dem ATI 2, welches also ein Zuordnungsinformationsmittel darstellt, mit dem "get-Befehl" nach, mit welchen einzelnen Befehlen in den einzelnen Server-Diensten der drei Zeitungen nach der Zimmeranzahl zu suchen ist.

Nachdem der Software-Agent 1 die individuellen Befehle 5.1 bis 5.3 der einzelnen Server-Dienste der Zeitungen 3.1 bis 3.3 für die Anfrage nach einer Wohnung mit bestimmter Zimmeranzahl anfragt, bekommt er vom ATI 2 mitgeteilt, dass der Befehl für die Süddeutsche Zeitung 3.1 "zimmerAnzahl()" heißt, bei der AZ 3.2 "getZAnz()" und beim Münchner Kurier 3.3 diese Anfrage mit dem Befehl "getRoomNumber()" zu stellen ist. Entsprechend diesen nun bekannten Befehlen kann der Software-Agent 1 direkt Kontakt mit den Server-Diensten der drei verschiedenen Zeitungen 3.1 bis 3.3 aufnehmen und unter Anwendung der richtigen Befehle seine konkrete Suchanfrage stellen.

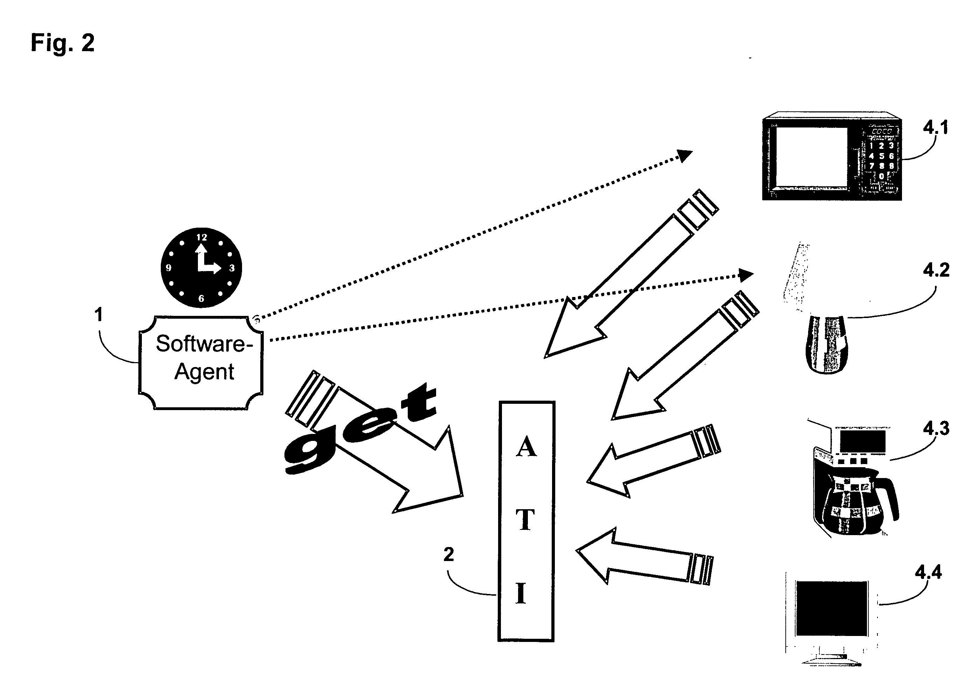

Eine weitere Anwendungsmöglichkeit des erfindungsgemäßen Verfahrens und Systems zur Kommunikation zwischen Client-Anwendungen und Server-Diensten ist in der Figur 2 dargestellt.

Hier befindet sich ein Software-Agent 1 in einem lokalen Heimnetzwerk, beispielsweise einem Funknetzwerk nach dem DECT-Standard oder einem LAN. Dem Software-Agenten 1 sind zunächst lediglich die Standardbefehle bekannt, mit denen sich die Funktionen eines Hauses steuern lassen. Beispielsweise sind hier als Funktionen eine Mikrowelle 4.1, ein Licht 4.2, eine Kaffeemaschine 4.3 und ein Computer 4.4 dargestellt. Selbstverständlich lässt sich diese Funktionsaufzählung beliebig erweitern, so dass beispielsweise Audio-/Videoanlagen, Heizungs- und Klimaanlagen, Abschattungsanlagen und automatische Türen usw. hinzugehören.

In dem dargestellten Beispiel hat der Software-Agent 1 die Aufgabe zu bestimmten Zeiten (dargestellt durch die Uhr) die einzelnen Funktionen in Betrieb zu nehmen. Hierzu setzt er sich zunächst mit dem ATI 2 in Verbindung und erfragt von diesem Zuordnungsinformationsmittel die notwendigen individuellen Befehle der einzelnen Funktionselemente 4.1 bis 4.4. Selbstverständlich müssen diese Zuordnungen zuvor in dem Zuordnungsinformationsmittel 2 gespeichert worden sein. Nach der Abfrage der entsprechenden Zuordnung der individuellen Befehlssätze zu den Standardbefehlen ist es dem Software-Agent 1 nun möglich, direkt Kontakt mit den einzelnen Funktionselementen 4.1 bis 4.4 über das Heimnetzwerk aufzunehmen, so dass diese entsprechend den Vorgaben gesteuert werden können.

Im folgenden wird noch skizziert, wie der Aufbau eines konkreten ATI-Standards beziehungsweise Unterstandards aussehen kann:

Das ATI sollte für eine sinnvolle Anwendung im Sinne des Erfindungsgedanken als ein Standard realisiert werden, denn Software-Agenten und Server-Dienste sollen ja - ohne sich vorher zu "kennen" - darüber kommunizieren können. Die nachfolgend aufgeführten Code-Beispiele sind in Java formuliert. Dies soll jedoch keine Einschränkung für die Erfindung darstellen, da das ATI auch in anderen Sprachen zur Verfügung gestellt werden kann. Bei der Kontaktaufnahme zwischen einer Client-Anwendung und einem Server-Dienst über Middleware (Remote-Protokolle) spielt die Programmiersprache ohnehin eine untergeordnete Rolle.

Der Aufbau des Standards kann also derart gestaltet sein, dass er aus einem allgemeinen Teil besteht, in dem sozusagen der "Handshake" zwischen Client und Server realisiert wird, und zusätzlich einer Reihe von Unterstandards, die für bestimmte Arten von Server-Diensten entwickelt werden. Beispiele solcher Gruppierungen können - ohne hier eine abschließende Aufzählung wiederzugeben - sein:
- textverarbeitende Tools (MS Wordpad, MS WinWord, Adobe Acrobat Reader, WordPerfect, EMACS Editor, ...);
- graphische Tools (MS Paintbrush, MS Imaging, Paintshop Pro, Adobe Photoshop, ...);
- Organizer (MS Outlook, Palm Organizer, ...);
- Telefonsoftware (GSM stacks, GPRS, proprietäre call stacks, ...);
- Gebäudesteuerung.

Der allgemeine Teil, der der Kontaktaufnahme mit dem Server-Dienst (=Tool) unabhängig von dessen Zuordnung in eine der genannten Gruppierungen dient, kann folgende Methoden enthalten:
- boolean ATI isToolAvailable (int timeout): Tool bereit zur Kontaktaufnahme
- ATI_Type ATI_getToolType(): Abprüfen, zu welcher Gruppe von Tools das Tool gehört (ATI_Type ist eine enumeration mit Werten, die ebenfalls im Standard festgelegt werden, z.B.
ATI_TEXT_PROCESSING,
ATI_GRAPHICS usw.)
- String ATI_getATIVersion(): Abfrage der unterstützten ATI-Version
- ATI_Sync ATI_getSyncType(): Abfrage, wie die Synchronisation der ATI-Abfragen ablaufen soll (ATI_Sync ist eine enumeration mit Werten, die ebenfalls im Standard festegelegt werden, z.B.
ATI_SYNC_WAIT_FOREVER,
ATI_SYNC_TIMEOUT,
ATI_SYNC_ASYNCHRONOUS usw.)
- void ATI accreditation (long accKey): Methode, mit der sich der A-gent mit Hilfe eines als Parameter übergebenen Schlüssels als zum Zugriff berechtigt "ausweisen" kann (falls der Zugriff auf das Tool Beschränkungen unterliegt; über diesen Schlüssel könnte z.B. auch das Billing geregelt werden, falls der Zugriff via Agent kostenpflichtig sein soll)
usw.

Der spezifische Unterstandard ist von der Semantik der jeweiligen Klasse von Tools abhängig, für den er eingerichtet wurde.

Nachfolgend werden einige Beispielmethoden für den Unterstandard "Textverarbeitung" gezeigt. Diese sind also auf Tools anwendbar, für die beim allgemeinen Handshake zu Beginn die oben aufgeführte Methode ATI_getToolType() den Wert ATI_TEXT_PROCESSING zurückgeliefert hat:
- String ATI_getOpenCommand(): Abfrage des Kommandos zum Öffnen eines Dokuments
- String ATI_getDocStartCommand(): Abfrage des Kommandos, mit dem man an den Anfang des Dokuments gelangt
- String ATI_getFindStringCommand(): Abfrage des Kommandos, mit dem man im Dokument eine Zeichenkette sucht
- String ATI_getFindFormatCommand(): Abfrage des Kommandos, mit dem man im Dokument eine bestimmte Formatierung sucht
usw.

Die Kommandos werden hier vom Server-Dienst als String zurückgeliefert, wobei der String Metazeichen enthält, die die Stellen zum Einsetzen von Argumenten kennzeichnen. So könnte ein Textverarbeitungs-Tool beim Aufruf ATI_getOpenCommand() die Zeichenkette "open(%1)" zurückliefern. Dabei steht %1 für das erste Argument, was in diesem Falle der Name des zu öffnenden Dokuments wäre.

Eine Alternative zu eben gezeigten Gestaltung der ATI-Methoden wäre eine generische Lösung, die etwa so aussehen könnte:
- String ATI_getCommand (ATI_CommandType cmd): Abfrage eines Kommandos; welches Kommando abgefragt wird, hängt vom übergebenen Parameter ab; dabei ist ATI_CommandType eine enumeration mit Werten, die ebenfalls im Standard festgelegt werden, z.B.
ATI_COMM_OPEN_COMMAND,
ATI COMM DOC START COMMAND,
ATI_COMM_FIND_STRING_COMMAND
usw.

Insgesamt wird mit der Erfindung also vorgeschlagen, das Kommunikationsproblem zwischen Client-Anwendungen und Server-Diensten aufgrund unterschiedlicher Befehlssätze dahingehend zu lösen, dass an einer beliebigen Stelle die notwendigen Zuordnungen zwischen einem Standardbefehlssatz und den individuellen Befehlssätzen der Server-Dienste bereitgestellt werden, so dass eine Client-Anwendung vor oder bei der Aufnahme der Verbindung mit einem Server-Dienst sich die entsprechende Übersetzung der Standardbefehle abfragen kann und anschließend mit diesen nun bekannten individuellen Befehlssätzen direkt mit dem Server-Dienst kommuniziert. Hierbei ist es besonders vorteilhaft, dass bestehende Server-Dienste und Programmiersprachen nicht umgeschrieben werden müssen, um sie an einen bestimmten Standard anzupassen, sondern dass es ausreicht, losgelöst von den bestehenden individuellen Programmiersprachen, einen Standardbefehlssatz zu erstellen, und diesem Standardbefehlssatz die entsprechenden individuellen Befehlssätze zuzuordnen und diese Zuordnung an geeigneter Stelle mit einer Zugriffsmöglichkeit der Client-Anwendung niederzulegen. Hierdurch wird es in keiner Weise notwendig die bestehende Programmiersprache oder Server-Dienste zu modifizieren, und trotzdem kann ein einfacher Zugriff von Client-Anwendungen erfolgen, die bei ihrer Programmierung noch keine Kenntnis von den jeweils individuellen Befehlssätzen der Server-Dienste besitzen.

Selbstverständlich können diese entsprechenden Zuordnungen sowohl zentral als auch dezentral oder auch individuell bei den jeweiligen Server-Diensten hinterlegt werden.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

1. Verfahren zur Kommunikation zwischen mindestens einem Client und mindestens einem Server in einem Kommunikationsnetz, in dem Client-Anwendungen (1) mit Server-Diensten (3.x, 4.x) kommunizieren, wobei die Server-Dienste (3.x, 4.x) unterschiedliche individuelle Befehlssätze mit Individualbefehlen (5.x) verwenden, **dadurch gekennzeichnet, dass** durch Zuordnungsinformationsmittel (2) zwischen mindestens einem Standardbefehl und mindestens einem individuellen, einem bestimmten Server-Dienst (3.x, 4.x) zugeordneten, Individualbefehl auf Anfrage der Client-Anwendung (1) die Entsprechung zu mindestens einem Standardbefehl in Form eines Individualbefehls (5.x) mitgeteilt wird, so dass die Client-Anwendung (1) von nun an unter Verwendung des mindestens einen Individualbefehls (5.x) mit dem Server-Dienst (3.x, 4.x) kommunizieren kann.

2. Verfahren gemäß dem voranstehenden Patentanspruch 1, **dadurch gekennzeichnet, dass** mindestens ein Zuordnungsinformationsmittel (2) als Teil des Server-Dienstes (3.x, 4.x) betrieben wird.

3. Verfahren gemäß einem der voranstehenden Patentansprüche 1 bis 2, **dadurch gekennzeichnet, dass** mindestens ein Zuordnungsinformationsmittel (2) auf dem Server des Server-Dienstes (3.x, 4.x) betrieben wird.

4. Verfahren gemäß einem der voranstehenden Patentansprüche 1 bis 3, **dadurch gekennzeichnet, dass** mindestens ein Zuordnungsinformationsmittel (2) als gesonderte, vorzugsweise zentral organisierte, Datenbank oder Tabelle im Kommunikationsnetz betrieben wird.

5. Verfahren gemäß einem der voranstehenden Patentansprüche 1 bis 4, **dadurch gekennzeichnet, dass** die Kommunikation zwischen Client und Server eine Datenabfrage der Client-Anwendung (1) vom Server-Dienst (3.x) ist.

6. Verfahren gemäß einem der voranstehenden Patentansprüche 1 bis 5, **dadurch gekennzeichnet, dass** die Kommunikation zwischen Client und Server eine Steuerung des Servers durch den Client ist.

7. Verfahren gemäß einem der voranstehenden Patentansprüche 1 bis 6, **dadurch gekennzeichnet, dass** die Kommunikation zwischen Client und Server im Internet und/oder in einem Firmennetzwerk und/oder in einem Gebäudesteuerungsnetz und/oder einem Funkkommunikationsnetz stattfindet.

8. Verfahren gemäß einem der voranstehenden Patentansprüche 1 bis 7, **dadurch gekennzeichnet, dass** die Anfrage des Client mit Hilfe eines Software-Agenten ausgeführt wird.

9. System für die Kommunikation zwischen Client-Anwendungen (1) und Server-Diensten (3.x, 4.x) in einem Kommunikationsnetz, insbesondere zur Durchführung eines Verfahrens gemäß einem der voranstehenden Verfahrensansprüche, bestehend aus mindestens einer Client-Anwendung (1), einer Vielzahl von Server-Diensten (3.x, 4.x) und einem, die mindestens eine Client-Anwendung (1) und die Server-Dienste (3.x, 4.x) verbindenden, Netzwerk, wobei die Server-Dienste (3.x, 4.x) durch unterschiedliche Befehlssätze gesteuert werden, **dadurch gekennzeichnet, dass** Zuordnungsinformationsmittel (2) vorgesehen sind, welche auf Anfrage der mindestens einen Client-Anwendung (1) die Entsprechung mindestens eines Standardbefehls zu mindestens einem individuellen, einem bestimmten Server-Dienst (3.x, 4.x) zugeordneten, Individualbefehl (5.x) in Form des Individualbefehls (5.x) an die Client-Anwendung (1) mitteilt, so dass die Client-Anwendung (1) von nun an unter Verwendung des mindestens einen Individualbefehls (5.x) mit dem Server-Dienst (3.x, 4.x) kommunizieren kann.

10. System gemäß dem voranstehenden Patentanspruch 9, **dadurch gekennzeichnet, dass** die Client-Anwendung (1) einen Speicher aufweist, in dem die vom Zuordnungsinformationsmittel (2) erhaltenen Entsprechungen niedergelegt sind.

11. System gemäß einem der voranstehenden Patentansprüche 9 bis 10, **dadurch gekennzeichnet, dass** mindestens ein Zuordnungsinformationsmittel (2) ein Teil des Server-Dienstes (3.x, 4.x) ist.

12. System gemäß einem der voranstehenden Patentansprüche 9 bis 11, **dadurch gekennzeichnet, dass** mindestens ein Zuordnungsinformationsmittel (2) als eigener Server-Dienst im Kommunikationsnetz betrieben wird, wobei vorzugsweise in einer Datenbank oder Tabelle die Entsprechungen von Standardbefehlen für eine Vielzahl von Server-Diensten (3.x, 4.x) gespeichert sind.

13. System gemäß einem der voranstehenden Patentansprüche 9 bis 12, **dadurch gekennzeichnet, dass** die Kommunikation zwischen Client und Server eine Datenabfrage der Client-Anwendung (1) vom Server-Dienst (3.x) ist.

14. System gemäß einem der voranstehenden Patentansprüche 9 bis 13, **dadurch gekennzeichnet, dass** die Client-Anwendung ein Software-Agent (1) ist, der das Kommunikationsnetz nach Informationen durchsucht.

15. System gemäß einem der voranstehenden Patentansprüche 9 bis 14, **dadurch gekennzeichnet, dass** die Client-Anwendung ein Steuerungsprogramm für eine Gebäudesteuerung ist.

16. System gemäß einem der voranstehenden Patentansprüche 9 bis 15, **dadurch gekennzeichnet, dass** das Kommunikationsnetz das Internet beinhaltet.

17. System gemäß einem der voranstehenden Patentansprüche 9 bis 16, **dadurch gekennzeichnet, dass** das Kommunikationsnetz ein Intranet in einem Unternehmen und/oder einer öffentliche Einrichtung beinhaltet.

18. System gemäß einem der voranstehenden Patentansprüche 9 bis 17, **dadurch gekennzeichnet, dass** das Kommunikationsnetz ein Gebäudesteuerungsnetz beinhaltet.

19. System gemäß einem der voranstehenden Patentansprüche 9 bis 18, **dadurch gekennzeichnet, dass** das Kommunikationsnetz ein öffentliches oder lokales Funkkommunikationsnetz beinhaltet.

20. System gemäß einem der voranstehenden Patentansprüche 9 bis 19, **dadurch gekennzeichnet, dass** ein Server-Dienst eine Datenbank oder Textverwaltung oder Tabelle ist.

21. System gemäß einem der voranstehenden Patentansprüche 9 bis 20, **dadurch gekennzeichnet, dass** ein Server-Dienst Teil eines steuerbaren Funktionsgegenstandes, vorzugsweise in einem Gebäude oder Fahrzeug oder einer öffentlichen Einrichtung, ist.

22. System gemäß einem der voranstehenden Patentansprüche 9 bis 21, **dadurch gekennzeichnet, dass** ein Server-Dienst mindestens ein abfragbares Messinstrument aufweist.

23. System gemäß einem der voranstehenden Patentansprüche 9 bis 22, **dadurch gekennzeichnet, dass** ein Server-Dienst eine Datenbank ist.
